# EUROPÄISCHE PATENTANMELDUNG

(11) **EP 1 598 967 A2**
(43) Veröffentlichungstag der Anmeldung: **23.11.2005**
(21) Anmeldenummer: 05009459.8
(22) Anmeldetag: 29.04.2005
(51) Int. Cl.: H04H 1/00, H04B 1/16

(54) **Verfahren bzw. Datenverarbeitungsvorrichtung zum Verarbeiten von digitalen Daten eines Signals**

(30) Priorität: 21.05.2004 DE 102004025472
(71) Anmelder: Micronas GmbH, 79108 Freiburg (DE)
(72) Erfinder: Renirie, Wim, 6642 CM Beunigen (NL); Stoorvogel, Hans, 6581 IT Malden (NL)
(74) Vertreter: Patentanwälte Westphal, Mussgnug & Partner

(57) **Zusammenfassung**

Die Erfindung bezieht sich auf ein Verfahren zum Verarbeiten eines Signals (s), wobei über einen gewünschten Kanal (N) einer Vielzahl von Frequenz-Kanälen (N-2, N-1, N, N+1, N+2) gewünschte Daten (d(f(N))) empfangen werden und über einen dazu benachbarten Kanal (N-2, N-1, N+1, N+2) unerwünschte Daten (d(f(N-2)), d(f(N-1)), d(f(N+1)), d(f(N+1))) empfangen werden und wobei das Signal (s) mit einer Aliasing des gewünschten Kanals (N) vermeidenden Abtastfrequenz (fa) zum Erzeugen digitaler Daten (d°) abgetastet wird, wobei die Abtastfrequenz (fa = 2f(N-1, N, N+1)) hoch genug zum Aliasing vermeidenden Abtasten des gewünschten Kanals (N) und zumindest eines der benachbarten Kanäle (N-1, N+1) gesetzt wird. Entsprechend wird eine Datenverarbeitungsvorrichtung als insbesondere Rundfunkempfänger zum Durchführen eines solchen Verfahrens vorgeschlagen.

## Beschreibung

In Rundfunkumgebungen und anderen Funksystemen werden analoge Signale über eine Funk-Schnittstelle übertragen, wobei die Übertragung von Daten über jeweils zugeordnete Frequenzkanäle erfolgt. Durch die Benutzung benachbarter Kanäle kann eine starke Interferenz entstehen. Dies gilt insbesondere in terrestrischen Umgebungen, bei denen die bestehende oder zukünftige Netzplanung benachbarte Kanäle zulässt, auf welchen mit 35 dB stärker als in dem gewünschten Kanal übertragen wird. Benachbarte analoge Kanäle führen üblicherweise zu frequenzselektiven Störungen auf dem gewünschten Kanal. Bei den meisten digitalen Rundfunktechniken können in einem Kanalschätzer Funktionen implementiert werden, mit welchen solche frequenzselektive Störungen erfasst werden, um diese Kenntnis zum Verbessern von Fehlerkorrekturmöglichkeiten zu nutzen. In Situationen, in denen der Nachbarkanal ein digitaler Kanal ist, welcher auf der kontinuierlichen Einführung neuer digitaler Multiplextechniken beruht, ist es zukünftig immer wahrscheinlicher, dass die Störung eher die Natur einer Gauss'schen Störung annimmt, d. h. einer Störung, welche durch die vorstehend genannten Kanalschätzertechniken nicht mehr reduziert werden kann.

Fig. 3 stellt eine typische Implementierung eines Empfängers für Rundfunksignale dar. In einer Schnittstelle 0 wird ein hochfrequentes (HF) Signal s eingegeben. Dieses analoge Signal s wird einem geräuscharmen Verstärker 1, LNA (Low Noise Amplifier) zugeführt. Das verstärkte Signal wird einem Nachführungsfilter 2 (Tracking-Filter) zugeführt, dessen Ausgangssignal einem Mischer 3 zugeführt wird. Dem Nachführungsfilter 2 und dem Mischer 3 wird außerdem ein Signal eines Oszillators 4 angelegt. Das aus dem Mischer ausgegebene gemischte Signal wird einem Sägezahnfilter 5, SAW zugeführt, dessen Ausgangssignal einem Verstärker 6 zugeführt wird. Der Verstärker 6 gibt ein Zwischenfrequenz-Signal s* aus. Diese erste Baugruppe von der Schnittstelle 0 bis zum Verstärker 6 bildet einen für sich bekannten Tuner aus. Das Zwischenfrequenz-Signal s* wird zur weiteren Verarbeitung einer nachfolgenden Baugruppe zugeführt, welche üblicherweise einen Demodulator ausbildet. Das Zwischenfrequenz-Signal s* wird einem Analog-/Digital-Wandler ADC, 7 angelegt, welcher das analoge Zwischenfrequenz-Signal s* in ein digitales Signal bzw. eine Abfolge digitaler Daten d° umsetzt. Diese digitalen Daten d° werden einer digitalen Signalverarbeitungseinrichtung DSP, 8 zugeführt, welche üblicherweise insbesondere ein digitales Demodulationssystem umfasst.

Bekannte Lösungen zum Verbessern der Leistungsfähigkeit bezüglich benachbarter Kanäle, welche bei derartigen Anordnungen implementiert sind, können in drei Kategorien unterteilt werden.

Gemäß dem ersten Ansatz wird die Linearität der Eingangsstufe des Tuners verbessert. Beim Vorliegen starker Signale wird die gesamte Leistung aller dieser Kanäle der Verstärkerstufe, d. h. dem geräuscharmen Verstärker 1, des Tuners zugeführt. Zumeist wird dieser geräuscharme Verstärker 1 mit Blick auf eine hohe Linearität optimiert. Aus US 2002008788 ist ein Empfänger bekannt, bei dem ein Vorspannungsstrom des Hochfrequenz-Verstärkers beim Vorliegen von Signalen benachbarter Kanäle zum Erhöhen der Linearität eingestellt wird. Somit bestehen Möglichkeiten zum Reduzieren des Stroms, wenn keine benachbarten interferierenden Signale vorliegen. Eine hohe Linearität des geräuscharmen Verstärkers 1 verhindert eine Übersteuerung (saturation) dieser Stufe. Das interferierende Signal wird jedoch nicht entfernt und der verbleibende Teil des Systems muss nach wie vor mit den hohen interferierenden Signalen fertig werden.

Der zweite Ansatz besteht darin, dass in dem analogen Bereich eine zusätzliche Filterung vorgenommen wird, um die Signalanteile des ungewünschten Kanals vor dem Abtasten in dem digitalen Bereich weiter zu unterdrücken. Dieser Ansatz wird üblicherweise in Situationen verwendet, in denen ein Empfang mit hoher Leistungsfähigkeit gewünscht wird, wobei die weitere Filterung hinter der abwärts konvertierenden Stufe, d. h. hinter dem Mischer 3, durchgeführt wird. Das Hinzufügen eines entsprechenden Filters 5 im analogen Bereich ist jedoch sehr teuer. Wegen der erforderlichen steilen Dämpfungskurve werden Sägezahn-Filter (SAW) verwendet. Aufgrund der physikalischen Dimensionen kann nicht erwartet werden, dass der Preis dieser Filter mit der Zeit deutlich fällt. Außerdem führen diese Filter 5 eine starke Dämpfung des gewünschten Signals durch, welche eine Kompensierung durch eine zusätzliche Verstärkung durch den Verstärker 6 erforderlich macht.

Der dritte Ansatz besteht darin, die Tuner-Frequenz abzustimmen, um die unerwünschten interferierenden Signale soweit wie möglich außerhalb des sichtbaren Bereichs der Demodulatorschaltung 7, 8 zu schieben, welche das hereinkommende Signal weiter verarbeitet. Dadurch wird eine höhere Dämpfung des Signals des unerwünschten benachbarten Kanals durch die verfügbaren Filter in dem System erzielt, wie dies aus WO 0106768 bekannt ist. Jedoch hilft eine Verschiebung der Tuner-Frequenz nur in Situationen, in denen nur ein einziges benachbartes interferierendes Signal existiert. Der mögliche Verschiebungsbereich ist außerdem beschränkt, da ansonsten das Signal des gewünschten Kanals durch die Filter in dem System ebenfalls gedämpft werden würde.

Aus EP 1384314 ist eine Frequenzkonvertierung durch Unterabtastung bekannt, wobei es sich um ein zweiphasiges Abtastsystem für reduzierte Frequenz- und Leistungsanforderungen hinsichtlich des Verstärkers und des Analog-/Digital-Wandlers handelt. Aus TW 484315 ist ein Fernsehempfänger für digitale Signale mit Möglichkeiten einer Offset-Abstimmung bekannt, wobei die Tuner-Frequenz beim Vorliegen eines benachbarten Kanals verschoben wird, wobei eine entsprechende Information aus einer Kanalliste erhalten wird. Aus KR 2000045148 ist eine Vorrichtung zum Reduzieren einer Interferenz eines benachbarten Kanals in einem digitalen Fernsehempfänger bekannt.

Die Aufgabe der Erfindung besteht darin, ein alternatives oder in Kombination mit bestehenden Verfahren verbessertes Verfahren sowie eine entsprechende Datenverarbeitungsvorrichtung zum Verarbeiten von Daten eines Signals mit Blick auf die Reduzierung unerwünschter Daten eines benachbarten Kanals vorzuschlagen.

Diese Aufgabe wird durch das Verfahren mit den Merkmalen des Patentanspruchs 1 bzw. durch die Datenverarbeitungsvorrichtung mit den Merkmalen des Patentanspruchs 11 gelöst.

Bevorzugt wird demgemäß ein Verfahren zum Verarbeiten eines Signals, wobei über einen gewünschten Kanal einer Vielzahl von Frequenz-Kanälen gewünschte Daten empfangen werden und über einen dazu benachbarten Kanal unerwünschte Daten empfangbar sind und wobei das Signal mit einer Aliasing des gewünschten Kanals vermeidenden Abtastfrequenz zum Erzeugen digitaler Daten abgetastet wird, wobei die Abtastfrequenz hoch genug zum Aliasing vermeidenden Abtasten des gewünschten Kanals und zumindest eines der benachbarten Kanäle gesetzt wird.

Entsprechend wird bevorzugt eine Datenverarbeitungsvorrichtung zum Verarbeiten eines insbesondere analogen Signals mit einer Schnittstelle zum Eingeben des Signals, wobei über einen gewünschten Kanal einer Vielzahl von Frequenz-Kanälen gewünschte Daten empfangen werden und über einen dazu benachbarten Kanal unerwünschte Daten empfangbar sind, und mit einer Abtasteinrichtung zum Abtasten des Signals zum Erzeugen digitaler Daten mit einer Aliasing des gewünschten Kanals vermeidenden Abtastfrequenz, wobei die Abtasteinrichtung mit einer Abtastfrequenz zum Aliasing des gewünschten Kanals und zumindest eines benachbarten Kanals vermeidenden Abtasten ausgelegt ist.

Eine solche Verfahrensweise bzw. Datenverarbeitungsvorrichtung ermöglicht das Aliasing vermeidende Abtasten auch interferierender Signalkomponenten eines benachbarten Kanals, so dass in einem nachfolgenden Verfahrensschritt diese unerwünschten Signalkomponenten bzw. Daten herausgefiltert werden können. Im Idealfall sind dadurch Maßnahmen zum Reduzieren unerwünschter Daten bzw. Signalkomponenten benachbarter Kanäle in der analogen Empfängerstufe entbehrlich oder deutlich reduzierbar. Unter benachbarten Kanälen bzw. unerwünschten Kanälen sind nicht nur Kanäle des eigenen Rundfunksystems zu verstehen, sondern auch Signalkomponenten eines ggf. fremden Kommunikationssystems, welches auf einer benachbarten Frequenz sendet. Der Begriff Kanal ist weit zu fassen und umfasst abhängig von dem Kommunikations- bzw. Rundfunksystem eine einzelne diskrete Frequenz oder in üblicherer Art und Weise ein Frequenzband mit einer systemabhängigen Kanalbandbreite des gewünschten Kanals und der dazu benachbarten Kanäle.

Vorteilhafte Ausgestaltungen sind Gegenstand abhängiger Ansprüche.

Bevorzugt wird insbesondere ein Verfahren, bei dem das Signal über eine Funk-Schnittstelle eines Rundfunksystems empfangen wird.

Bevorzugt wird insbesondere ein Verfahren, bei dem die digitalen Daten zum Reduzieren oder Herausfiltern der unerwünschten Daten zum Bereitstellen gefilterter digitaler Daten mit den gewünschten Daten gefiltert werden.

Bevorzugt wird insbesondere ein Verfahren, bei dem die Abtastfrequenz hoch genug zum Aliasing vermeidenden Abtasten der Daten des gewünschten Kanals und der Daten des dazu höher frequent benachbarten Kanals gesetzt wird.

Bevorzugt wird insbesondere ein Verfahren, bei dem die Abtastfrequenz hoch genug zum Aliasing vermeidenden Abtasten des gewünschten Kanals und mehrerer, insbesondere zumindest zweier dazu höher frequenter benachbarter Kanäle gesetzt wird.

Bevorzugt wird insbesondere ein Verfahren, bei dem die Abtastfrequenz des Signals zum Aliasing vermeidenden Abtasten höher frequenter benachbarter Signalkomponenten auf mehr als das Zweifache der Kanalbandbreite des gewünschten Kanals gesetzt wird. Insbesondere wird bevorzugt bei einem solchen Verfahren, wenn die Abtastfrequenz abhängig von der Anzahl der beim Reduzieren zu berücksichtigenden benachbarten Kanäle gesetzt wird. Insbesondere wird bevorzugt bei einem solchen Verfahren, wenn die Abtastfrequenz pro zu berücksichtigendem benachbarten Kanal um das Zweifache erhöht gesetzt wird.

Bevorzugt wird insbesondere ein Verfahren, bei dem ein direkt abtastendes Szenario für die Verarbeitung des Signals bzw. der Daten verwendet wird.

Bevorzugt wird insbesondere ein Verfahren, bei dem ein unterabgetastetes Szenario für die Verarbeitung des Signals bzw. der Daten verwendet wird.

Bevorzugt wird insbesondere eine Datenverarbeitungsvorrichtung, bei der die Abtasteinrichtung mit einer Abtastfrequenz zum Aliasing vermeidenden Abtasten des gewünschten Kanals und zumindest eines höher frequenten benachbarten Kanals betrieben wird.

Bevorzugt wird insbesondere eine Datenverarbeitungsvorrichtung, die ausgestattet und angesteuert ist zum Durchführen eines solchen Verfahrens.

Bevorzugt wird insbesondere eine Datenverarbeitungsvorrichtung als Bestandteil eines Rundfunkempfängers mit einer Filtereinrichtung zum Reduzieren der unerwünschten Daten, wobei die Filtereinrichtung zum Filtern der digitalen Daten zum Reduzieren der unerwünschten Daten ausgelegt ist.

Vorteilhaft ist somit ein einfacher Tuner mit einem begrenzt wirkenden Filter gegen Aliaseffekte im analogen Bereich oder ein Tuner ohne ein solches analoges Filter.

Insbesondere mit Blick auf die Verfügbarkeit von Analog-/Digital-Wandlern mit einer genauen Abtastung bei hohen Frequenzen wird es möglich, die Abtastgeschwindigkeit zu erhöhen. Anstelle des Abtastens des Signals mit einer Geschwindigkeit des 2-fachen der Kanalbandbreite wird eine Abtastung mit mehr als dem 2-fachen der Kanalbandbreite vorgeschlagen. Bei beispielsweise dem 4-fachen der Kanalbandbreite eines digitalen Fernsehsystems wird sichergestellt, dass Aliasing-Effekte der direkten Nachbarkanäle den gewünschten Kanal nicht nachteilhaft durch Hereinspiegelung von Daten beeinträchtigen. Verbessert werden kann das Ergebnis durch eine nachfolgende Filterung, bei der die Datenanteile der benachbarten Kanäle herausgefiltert werden. Sollen nicht nur die direkt benachbarten Kanäle sondern auch die diesen benachbarten Kanäle gefiltert werden, kann die Abtastrate auf z. B. das 6-fache der Kanalbandbreite erhöht werden, um die Aliasing-Wirkung zu reduzieren. Eine nachfolgende Unterdrückung bzw. Filterung der ungewünschten Signalkomponenten vor der Demodulierung des empfangenen Signals kann im digitalen Bereich mit stark dämpfenden digitalen Filtern mit deutlich geringeren Kosten und deutlich höherer Effizienz als in dem analogen Bereich durchgeführt werden. Mit der beschriebenen Technik besteht die Möglichkeit, ein direkt abtastendes Szenario oder ein unterabtastendes Szenario zum Abtasten der Signale mit höheren Zwischenfrequenzen auszuwählen. Wenn beispielsweise eine Abtastrate mit der 6-fachen Kanalbandbreite verwendet wird, sind die Vorgaben für das Filter des Tuners deutlich geringer ansetzbar. Dies ermöglicht die Entwicklung von Tunern mit geringen Kosten und bietet große Vorteile für Tuner-Hersteller, welche die gesamte Tuner-Funktionalität in einem Silizium-Element implementieren möchten.

Eine Anwendung ist bei allen Empfängern und Empfängerfunktionen möglich, wenn der Empfang und die Verarbeitung von Daten durch starke Signale in Nachbarkanälen beeinträchtigt wird. Dies betrifft insbesondere Empfänger für digitale terrestrische TV-Standards, beispielsweise DVB-T, ISDB-T und 8VSB, aber auch andere Arten von Empfängern. Auch bei solchen ist ein breitbandiges Abtasten zum Verhindern von Aliasing auf das gewünschte Signal vorteilhaft einsetzbar.

Ein Ausführungsbeispiel der Erfindung wird nachfolgend anhand der Zeichnung näher erläutert. Es zeigen:
- Fig. 1: eine Anordnung von Komponenten einer Datenverarbeitungsvorrichtung zum Verarbeiten eines analogen Signals mit einer Reduzierung unerwünschter Daten eines zu einem gewünschten Kanal benachbarten Kanals;
- Fig. 2: Frequenzdiagramme zum Veranschaulichen eines Verfahrensablaufs zum Herausfiltern unerwünschter Daten von zu einem gewünschten Kanal benachbarten Kanälen; und
- Fig. 3: eine Anordnung einer Datenverarbeitungsvorrichtung gemäß dem Stand der Technik.

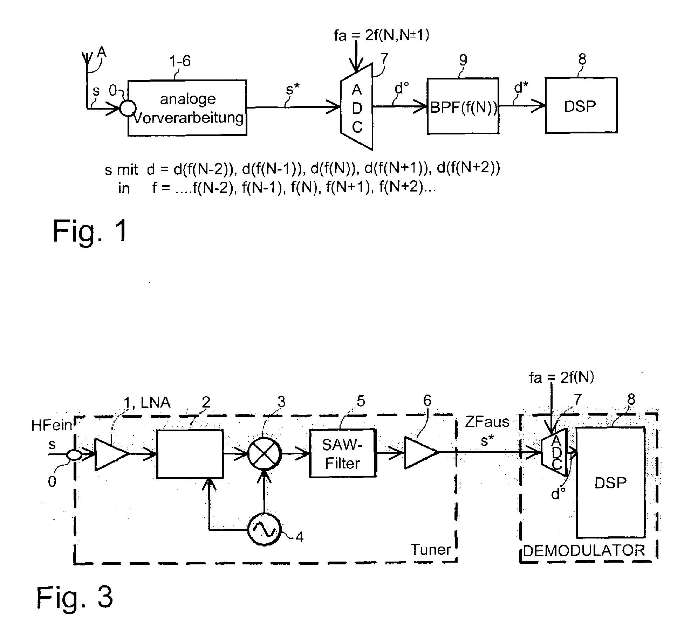

Fig. 1 zeigt eine beispielhafte Anordnung von Komponenten einer Datenverarbeitungsvorrichtung zum Verarbeiten eines Signals s. Das Signal s wird beispielsweise über eine Antenne A empfangen. Das Signal s ist ein Signal, welches zur Übertragung von Daten d dient. Zu übertragende Daten werden dabei jeweils einem Frequenz-Kanal N einer Vielzahl von verfügbaren Frequenz-Kanälen ... , N-2, N-1, N, N+1, N+2, ... zugeordnet. Jedem dieser Kanäle ist eine bestimmte Frequenz oder ein bestimmtes Frequenzband ..., f(N-2), f(N-1), f(N), f(N+1), f(N+2), ... zugeordnet.

Das empfangene analoge Signal s wird einer ersten Datenverarbeitungseinrichtung 1 - 6 zur analogen Vorverarbeitung über eine Schnittstelle 0 zugeführt. Die analoge Vorverarbeitung umfasst beispielsweise eine Datenverarbeitung in für sich bekannter Art und Weise, wie dies anhand Fig. 3 beschrieben ist. Vorteilhafterweise können jedoch einzelne der Schritte zur analogen Vorverarbeitung entfallen, welche zur Reduzierung von Signalkomponenten bzw. Daten dienen, welche als Bestandteil eines unerwünschten Frequenzbandes f(N-2), f(N-1), f(N+1), f(N+2) bzw. eines unerwünschten Kanals empfangen werden. Insbesondere kann die analoge Vorverarbeitung somit einen geräuscharmen Verstärker 1, einen Nachführungsfilter 2, einen Mischer 3, einen Oszillator 4, ggf. einen SAW-Filter 5 und einen Verstärker 6 umfassen, welche ein Zwischenfrequenz-Signal s* ausgeben.

Dieses Zwischenfrequenz-Signal s* wird einem Analog-/Digital-Wandler ADC, 7 zugeführt, welcher das Signal s* mit einer Abtastfrequenz fa abtastet und digitale Daten d° an seinem Ausgang bereitstellt. Das Abtasten erfolgt dabei mit einer Abtastfrequenz fa größer als einer Abtastfrequenz, welche zum Digitalisieren des gewünschten Kanals N der Vielzahl von Frequenz-Kanälen N-2, N-1, N, N+1, N+2 erforderlich ist. Die Abtastfrequenz fa wird dabei so hoch gewählt, dass auch ein Abtasten von benachbarten Kanälen, insbesondere des höher frequent benachbarten Kanals N+1 unter Vermeidung von Aliasing ermöglicht wird. Die Abtastfrequenz fa entspricht somit fa = 2f(N, N±1) bzw. dem Maximalwert der 2-fachen Frequenz dieses Frequenzbereichs. Diese digitalen Daten d° bieten den Vorteil, dass insbesondere die Datenanteile d(f(N)) des gewünschten Kanals N frei sind von durch Aliasing-Effekte hereingespiegelten Datenanteilen benachbarter Kanäle.

Diese digitalen Daten d° werden vorteilhafterweise zusätzlich einem Filter 9 zugeführt, welches als Bandpassfilter BPF(f(N)) zum Hindurchlassen von Komponenten der Frequenz bzw. des Frequenzbandes f(N) des gewünschten Kanals N ausgestaltet ist. Bei diesem Filter 9 handelt es sich um einen einfach realisierbaren digitalen Filter, das gefilterte digitale Daten d zur weiteren Datenverarbeitung an beispielsweise eine digitale Signalverarbeitungseinrichtung DSP, 8 ausgibt. Diese digitale Signalverarbeitungseinrichtung 8 umfasst beispielsweise die Funktionen eines für sich bekannten Demodulators. Möglich ist auch die Integrierung des Filters 9 zusammen mit dessen und weiteren Verarbeitungsschritten in einer solchen digitalen Signalverarbeitungseinrichtung 8.

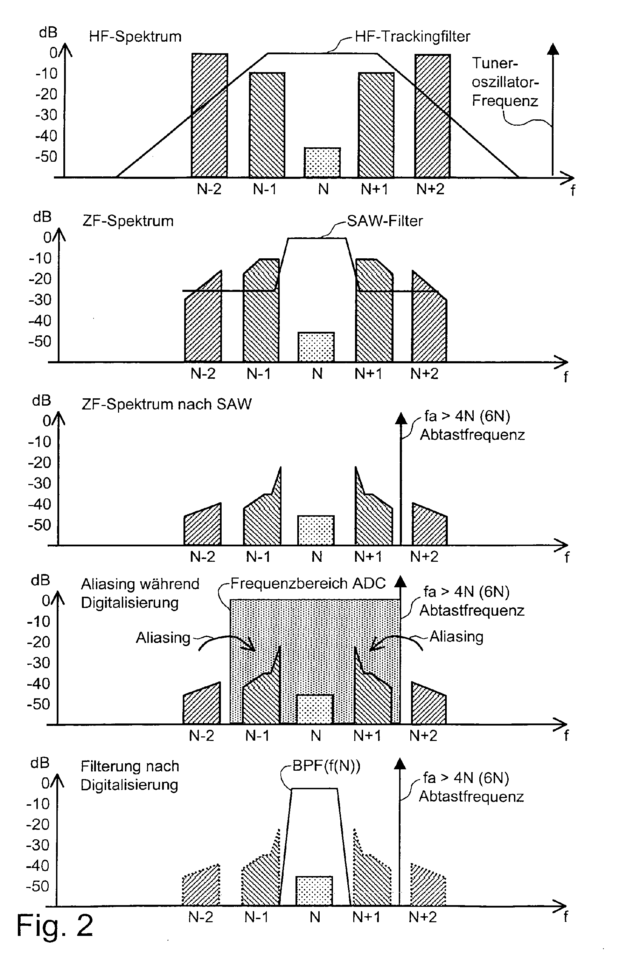

Fig. 2 zeigt einen beispielhaften Verfahrensablauf zum Verarbeiten eines empfangenen analogen Signals s. Dargestellt ist über der Frequenz f die Intensität der Signalkomponenten von beispielhaft fünf zueinander benachbarten Kanälen N-2, N-1, N, N+1, N+2. Eine Dämpfung durch Filter ist beispielhaft in einzelnen der Diagramme in Dezibel dB angegeben. Die einzelnen Diagramme zeigen von oben nach unten zeitlich aufeinanderfolgende Signalzustände verschiedener Verarbeitungsschritte. Insbesondere die drei ersten dargestellten Verarbeitungsschritte können jedoch optional entfallen, wenn das eingegebene Signal s direkt dem Analog-/Digital-Wandler 7 zugeführt wird.

Im ersten Diagramm ist ein zentraler gewünschter Kanal N dargestellt, dem als Kanalbandbreite ein Frequenzbereich um eine zentrale Frequenz f(N) zugeordnet ist. Über diesen Kanal N als einem gewünschten Kanal N werden gewünschte Daten d(f(N)) empfangen. Diesem gewünschten Kanal N sind weitere Kanäle N-2, N-1, N+1, N+2 benachbart, wobei es sich um unerwünschte Kanäle mit unerwünschten Daten d(f(N-2)), d(f(N-1)), d(f(N+1)) bzw. d(f(N+2)) handelt. Diese unerwünschten Daten haben nachteilhafterweise zusätzlich eine deutlich höhere Intensität als die gewünschten Daten d(f(N)), so dass sie den Empfang der gewünschten Daten stark beeinträchtigen. Vorzugsweise wird in für sich bekannter Art und Weise ein Hochfrequenz-Nachführungsfilter bzw. Hochfrequenz-Tracking-Filter auf das empfangene Signal mit diesen Kanälen N-2, ..., N+2 angewendet. Verwendet wird dabei eine Tuner-Oszillator-Frequenz deutlich höher als der Frequenz der unerwünschten Kanäle N-2, N-1, N+1, N+2 und des gewünschten Kanals N. In einem nachfolgenden Verarbeitungsschritt wird ein sogenanntes SAW-Filter angewendet, welches eine weitere Reduzierung der Intensität der unerwünschten Daten auf den unerwünschten Kanälen N-2, N-1, N+1, N+2 bewirkt. Das dritte Diagramm zeigt das dadurch erhaltene Zwischenfrequenzspektrum.

Nachfolgend wird eine Digitalisierung des analogen Signals s* nach dieser Vorverarbeitung durchgeführt. Die Digitalisierung erfolgt mit einer Abtastfrequenz fa.

Wie dies im nachfolgenden Diagramm veranschaulicht ist, wird die Abtastfrequenz fa so groß gewählt, dass der gewünschte Kanal N ohne negative Beeinflussung durch Aliasing-Effekte digitalisiert wird. Außerdem wird die Abtastfrequenz fa so groß angesetzt, dass auch die benachbarten unerwünschten Kanäle N-1, N+1 Aliasing vermeidend abgetastet werden. Die Abtastfrequenz fa wird entsprechend dem 2-fachen der Frequenz des höher frequenten unerwünschten Kanals N+1 gewählt. Vorzugsweise wird die Abtastfrequenz dabei etwas höher als die obere Frequenz der Kanalbandbreite des höher frequenten benachbarten Kanals N+1 gesetzt, so dass fa > 4N bzw. fa > 2f(N+1) gilt. Eine solche Digitalisierung bewirkt, dass Aliasing-Effekte durch die jeweils nächst folgenden benachbarten Kanäle N-2, N+2 sich allenfalls auf die benachbarten Kanäle N-1 bzw. N+1 auswirken. Soll auch dies ausgeschlossen werden, kann die Abtastfrequenz fa größer dem 6-fachen der Kanalbandbreite N bzw. größer dem 6-fachen der höchsten Frequenz f(N+2) der Kanalbandbreite des übernächsten höher frequent benachbarten Kanals N+2 des gewünschten Kanals N gesetzt werden.

Für die weitere digitale Signalverarbeitung steht somit eine Folge von digitalen Daten d° bereit, bei denen die Daten bzw. Datenkomponenten d(f(N)) des gewünschten Kanals N keine oder reduzierte nachteilhafte Aliasing-Effekte aufweisen. Zur weiteren Verbesserung der nachfolgenden digitalen Signalverarbeitung oder ggf. einer Rückumwandlung zu einem analogen Signal werden diese digitalen Daten d° vorteilhafterweise gefiltert. Als Filter wird bevorzugt ein Bandpassfilter BPF(f(N)) mit einem Durchlassbereich entsprechend der Kanalbandbreite f(N) des gewünschten Kanals N verwendet. Dadurch werden Datenkomponenten oder im Fall einer analogen Signalvorverarbeitung verbliebene Datenkomponenten d(f(N-2)), d(f(N-1)), d(f(N+1)) und d(f(N+2)) der unerwünschten Kanäle N-2, N-1, N+1, N+2 aus den digitalen Daten d° herausgefiltert. Die derart gefilterten digitalen Daten d* mit den im Idealfall einzig verbliebenen Daten d(f(N)) des gewünschten Kanals N werden dann zur weiteren Verarbeitung ausgegeben, insbesondere einer digitalen Signalverarbeitung DSP zugeführt.

Prinzipiell ist der Ansatz auch auf eine größere Anzahl von benachbarten Kanälen N+1, N+2, ..., N+k erweiterbar, wobei die bei der Digitalisierung verwendete Abtastfrequenz entsprechend dem 2-fachen oder mehr der entsprechenden höchsten Frequenz f(N+k) des höchst frequenten zu berücksichtigenden Kanals N+k gesetzt wird. Eine Berücksichtigung nieder frequenterer benachbarter Kanäle N-1, N-2, ..., N-k erfolgt bei dieser Verfahrensweise vorzugsweise automatisch.

## Patentansprüche

1. Verfahren zum Verarbeiten eines Signals (s), wobei
- über einen gewünschten Kanal (N) einer Vielzahl von Frequenz-Kanälen (N-2, N-1, N, N+1, N+2) gewünschte Daten (d (f(N))) empfangen werden und über einen dazu benachbarten Kanal (N-2, N-1, N+1, N+2) unerwünschte Daten (d(f(N-2)), d(f(N-1)), d(f(N+1)), d(f(N+2))) empfangbar sind und
- das Signal (f) mit einer Aliasing des gewünschten Kanals (N) vermeidenden Abtastfrequenz (fa) zum Erzeugen digitaler Daten (d°) abgetastet wird,
**dadurch gekennzeichnet , dass**
- die Abtastfrequenz (fa = 2f(N-1, N, N+1)) hoch genug zum Aliasing vermeidenden Abtasten des gewünschten Kanals (N) und zumindest eines der benachbarten Kanäle (N-1, N+1) gesetzt wird.

2. Verfahren nach Anspruch 1, bei dem das Signal (s) über eine Funk-Schnittstelle (0) eines Rundfunksystems empfangen wird.

3. Verfahren nach Anspruch 1 oder 2, bei dem die digitalen Daten (d°) zum Reduzieren oder Herausfiltern der unerwünschten Daten (d(f(N-2)), d(f(N-1)), d(f(N+1)), d(f(N+2))) zum Bereitstellen gefilterter digitaler Daten (d*) mit den gewünschten Daten (d(f(N))) gefiltert werden.

4. Verfahren nach einem vorstehenden Anspruch, bei dem die Abtastfrequenz (fa = 2f(N, N+1)) hoch genug zum Aliasing vermeidenden Abtasten der Daten (d(f(N))) des gewünschten Kanals (N) und der Daten (d(f(N+1))) des dazu höherfrequent benachbarten Kanals (N+1) gesetzt wird.

5. Verfahren nach einem vorstehenden Anspruch, bei dem die Abtastfrequenz (fa = 2f(N, N+1, N+2)) hoch genug zum Aliasing vermeidenden Abtasten des gewünschten Kanals (N) und mehrerer, insbesondere zumindest zweier dazu höher frequenter benachbarter Kanäle (N+1, N+2) gesetzt wird.

6. Verfahren nach einem vorstehenden Anspruch, bei dem die Abtastfrequenz (fa) des Signals (s) zum Aliasing vermeidenden Abtasten höher frequenter benachbarter Signalkomponenten auf mehr als das Zweifache der Kanalbandbreite (> 2f(N)) des gewünschten Kanals (N) gesetzt wird.

7. Verfahren nach Anspruch 6, bei dem die Abtastfrequenz (fa = 2f(N+k)) abhängig von der Anzahl (k) der beim Reduzieren zu berücksichtigenden benachbarten Kanäle (N+1, N+2, ... N+k) gesetzt wird.

8. Verfahren nach Anspruch 7, bei dem die Abtastfrequenz (fa) pro zu berücksichtigendem benachbarten Kanal (N+1, N+2) um das Zweifache erhöht gesetzt wird.

9. Verfahren nach einem vorstehenden Anspruch, bei dem ein direkt abtastendes Szenario für die Verarbeitung des Signals (s) bzw. der Daten verwendet wird.

10. Verfahren nach einem der Ansprüche 1 - 8, bei dem ein unterabgetastetes Szenario für die Verarbeitung des Signals (s) bzw. der Daten verwendet wird.

11. Datenverarbeitungsvorrichtung zum Verarbeiten eines insbesondere analogen Signals (s) mit
- einer Schnittstelle (0) zum Eingeben des Signals (s),
- wobei über einen gewünschten Kanal (N) einer Vielzahl von Frequenz-Kanälen (N-2, N-1, N, N+1, N+2) gewünschte Daten (d(f(N))) empfangen werden und über einen dazu benachbarten Kanal (N-2, N-1, N+1, N+2) unerwünschte Daten (d(f(N-2)), d(f(N-1)), d(f(N+1)), d(f(N+2))) empfangbar sind, und
- einer Abtasteinrichtung (7, ADC) zum Abtasten des Signals (s, s*) zum Erzeugen digitaler Daten (d°) mit einer Aliasing des gewünschten Kanals (N) vermeidenden Abtastfrequenz (fa),
**dadurch gekennzeichnet , dass**
- die Abtasteinrichtung (7) mit einer Abtastfrequenz (fa = 2f(N, N±1)) zum Aliasing des gewünschten Kanals (N) und zumindest eines dazu benachbarten Kanals (N-1, N+1) vermeidenden Abtasten betrieben wird.

12. Datenverarbeitungsvorrichtung nach Anspruch 11, bei der die Abtasteinrichtung (7) mit einer Abtastfrequenz (fa) zum Aliasing vermeidenden Abtasten des gewünschten Kanals (N) und zumindest eines höher frequenten benachbarten Kanals betrieben wird.

13. Datenverarbeitungsvorrichtung nach Anspruch 11 oder 12, die ausgestattet und angesteuert ist zum Durchführen eines Verfahrens nach einem der Ansprüche 1 - 10.

14. Datenverarbeitungsvorrichtung nach einem der Ansprüche 11
- 13 als Bestandteil eines Rundfunkempfängers mit einer Filtereinrichtung zum Reduzieren der unerwünschten Daten (d(f(N-2)), d(f(N-1)), d(f(N+1)), d(f(N+2))), wobei die Filtereinrichtung (9, BPF(f(N))) zum Filtern der digitalen Daten (d°) zum Reduzieren der unerwünschten Daten (d(f(N±1))) ausgelegt ist.

15. Tuner für eine Datenverarbeitungsvorrichtung nach einem der Ansprüche 11 - 14 mit einer begrenzt wirkenden Filtereinrichtung oder ohne Filtereinrichtung zum Herausfiltern oder Reduzieren unerwünschter Daten benachbarter Kanäle eines gewünschten Kanals.
